# Europäisches Patentamt
## European Patent Office
## Office européen des brevets

(19)

(11) Veröffentlichungsnummer: **0 207 931**
**B1**

(12) **EUROPÄISCHE PATENTSCHRIFT**

(45) Veröffentlichungstag der Patentschrift:
**18.05.88**

(51) Int. Cl.⁴: **B 65 G 57/22**

(21) Anmeldenummer: **86890185.1**

(22) Anmeldetag: **19.06.86**

(54) Vorrichtung zum Setzen von Einzelstücken auf eine Unterlage, z.B. Palette, in einer oder mehreren Schichten.

(30) Priorität: **01.07.85 AT 1949/85**

(43) Veröffentlichungstag der Anmeldung:
**07.01.87 Patentblatt 87/2**

(45) Bekanntmachung des Hinweises auf die Patenterteilung:
**18.05.88 Patentblatt 88/20**

(84) Benannte Vertragsstaaten:
**BE CH DE FR GB IT LI SE**

(56) Entgegenhaltungen:
**CH-A-603 463**
**DD-A-131 634**
**GB-A-1 185 981**

(73) Patentinhaber: **SIMMERING- GRAZ- PAUKER AKTIENGESELLSCHAFT, Brehmstrasse 16, A-1110 Wien (AT)**

(72) Erfinder: **Ribar, Norbert, Ing., Jägerstrasse 62-64/6/12, A-1200 Wien (AT)**

(74) Vertreter: **Köhler- Pavlik, Johann, Dipl.- Ing., Margaretenplatz 5, A-1050 Wien (AT)**

## Beschreibung

Die Erfindung betrifft eine Vorrichtung zum Setzen von Einzelstücken auf eine Unterlage, z. B. eine Palette, in einer oder mehreren Schichten, wobei die Stücke von immer der gleichen Stelle einer zulaufenden Vorratsreihe auf immer die gleiche räumliche Stelle über der Unterlage verbracht und auf die Unterlage abgesetzt werden und der Unterlage schrittweise, in Richtung der drei räumlichen Koordinatenachsen verlaufende Verstellbewegungen gegeben werden, deren Schrittgröße den entsprechenden Abmessungen der Stücke oder Vielfachen hiervon entspricht, bestehend aus einem horizontal um zumindest die Länge der Unterlage hin und her verfahrbaren Hubwagen und einem von dessen Hubeinrichtung getragenen, quer zur Bewegungsrichtung des Hubwagens angeordneten Linearförderer.

Eine Vorrichtung dieser Art ist dem Anmelder bekannt.

Das Produkt einer automatischen Produktionsmaschine, z. B. feuerfeste Steine einer Steinpresse, soll von einem von dieser Maschine wegführenden Förderband ("Pufferband") auf Paletten gestapelt werden. Dabei sollen verschiedene Setz-Schemata möglich sein.

Herkömmliche Setzanlagen bzw. Roboter führen alle Bewegungen zum Setzen der Einzelstücke auf die ruhende Palette, u.zw. Aufnehmen vom Pufferband, gegebenenfalls Wenden, Fahrt zum Ablagepunkt in drei Koordinaten sowie Ablegen mit einem Greifer durch.

Derartige Setzanlagen müssen, obwohl sie eine nur geringe Last zu fördern haben, sehr kräftig ausgeführt sein, um möglichst genau, rasch und schwingungsfrei arbeiten zu können und bedürfen einer vergleichsweise komplizierten Steuerung, um den Greifer oder dergleichen, der meist eine bogenförmige, hin- und hergehende Grundbewegung ausführt, von immer demselben Ausgangspunkt am Pufferband zu immer anderen Bewegungs-Endpunkten über der Palette - und dies außerdem von Schicht zu Schicht in verschiedener Höhe - zu bringen.

Dadurch, daß der Greifer oder dergleichen gegebenenfalls stark verschiedene Wege durchlaufen muß z. B. einmal zum rechtsvordersten Punkt der Palette, zum andernmal zum links-hintersten Punkt derselben - sind bei gleichbleibender Geschwindigkeit des Greifers oder dergleichen die Taktzeiten beim Versetzen verschieden lang oder es müßte eine zusätzliche Geschwindigkeitssteuerung vorgesehen werden, welche dem Greifer bei langem Förderweg eine hohe, bei kurzem Förderweg eine geringere Geschwindigkeit verleiht, sodaß für jedes zu versetzende Stück die gleiche Takt- oder Versetzzeit erreicht wird. Das bedeutet, daß die höchste Geschwindigkeit des Greifers nicht ausgenützt werden kann, bzw. daß dieser zeitweise mit überhöhter Geschwindigkeit betrieben werden muß.

Durch die DD-A-131 362 ist ein Palettiertisch bekannt geworden, der in drei räumlichen Koordinaten verstellbar ist und von einem Drehtisch aus mittels eines Schiebers mit Stückgut beschickt wird. Mittels eines Abstreifers kann das Stückgut auf die unter dem Palettiertisch angeordnete Palette abgelegt werden.

Die GB-A-1 185 981 zeigt einen höhenverstellbaren, auf Schienen fahrbaren Stapeltisch, der zwei Abschnitte von nichtangetriebenen Rollen aufweist, wobei das Stückgut über angetriebene Druckrollen zugeführt wird, und die Rollen durch den Schwung des Stückguts in Drehung versetzt werden, sodaß das Stückgut über die Rollen gleitet und spätestens bei einem Anschlag zum Stillstand kommt. Eine exakte Positionierung des Stückguts in Transportrichtung auf den Rollen ist nicht möglich und auch nicht beabsichtigt.

Ziel der Erfindung ist es, unter Vermeidung der oben erwähnten Nachteile der bekannten Vorrichtungen eine Vorrichtung zu schaffen, welche das Versetzen der Einzelstücke vereinfacht, ohne besondere Maßnahmen konstante Taktzeit ermöglicht und eine höhere Setzgeschwindigkeit, gleichbedeutend mit kürzerer Taktzeit, erreichen läßt.

Dieses Ziel wird bei einer Vorrichtung der eingangs erwähnten Art dadurch erreicht, daß gemäß der Erfindung der Linearförderer ein Laufband ist, dessen Umlenkrollen zumindest den doppelten Abstand der Breite der Unterlage besitzen.

Mit der erfindungsgemäßen Vorrichtung wird somit erreicht, daß die Einzelstücke in immer der gleichen Taktzeit Immer den gleichen Weg vom Ende des Pufferbandes zu immer derselben Stelle über der Palette zurücklegen, wobei Jeweils während der Leer- und Rückbewegung des Greifers, gegebenenfalls auch noch während der Arbeitsbewegung des Greifers, der Hubwagen, dessen Hubeinrichtung und das Laufband die Verstellbewegung zur Übernahme des jeweils folgenden Stückes durchführen.

Obwohl der Greifer mit gleichbleibend hoher Geschwindigkeit arbeitet, steht für die Verstellbewegungen der Palettenunterlage (des "Koordinatentisches") jeweils eine ausreichend lange Zeitspanne zur Verfügung, sodaß die Antriebe für die drei Koordinatenbewegungen mit eher niedrigen Leistungen für Beschleunigen, Verstellen und Bremsen das Auslangen finden.

Die Erfindung wird im folgenden anhand der Zeichnung erläutert, welche in weitgehend vereinfachter Form ein bevorzugtes Ausführungsbeispiel veranschaulicht.

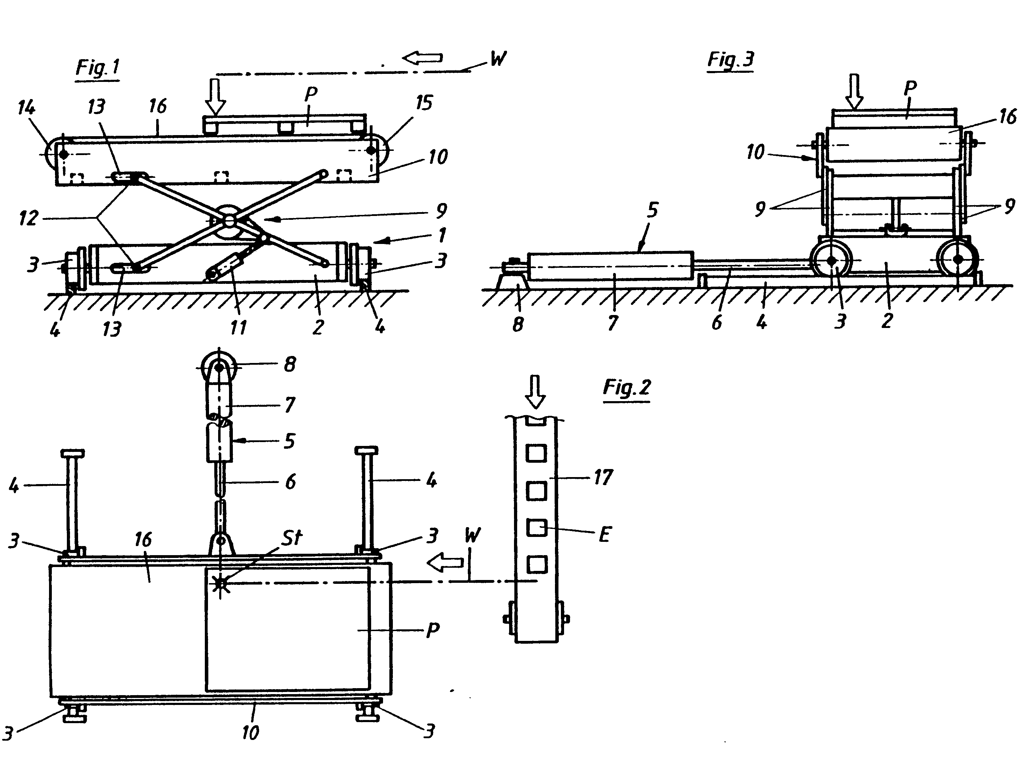

Hiebei ist
Fig. 1 eine Stirnansicht,
Fig. 2 eine Draufsicht, und
Fig. 3 eine Seitenansicht der erfindungsgemäßen Vorrichtung.

Der Hubwagen 1 besteht aus einem Rahmen 2, welcher mit Rädern 3 auf Schienen 4 verfahrbar ist. Zum Verschieben des Wagens 1 ist beim gezeigten Ausführungsbeispiel ein hydraulischer Motor 5 vorgesehen, welcher mit seiner Kolbenstange 6 am Wagen und mit seinem Zylinder 7 an einem ortsfesten Widerlager 8 angreift. Mit dem Wagen l ist mittels zweier Scherengestänge 9 die am Vorderende und am Hinterende des Wagens vorgesehen sind, ein Hubrahmen 10 verbunden, welcher mittels eines hydraulischen Motors 11, der an einem Lenker des Scherengestänges 9 und am Rahmen 2 des Wagens 1 angreift, nach oben und nach unten verstellbar ist. Die Synchronisation der beiden Scheren erfolgt durch ein Verbindungsrohr zwischen vorderer und hinterer Schere. Die beiden Lenker jedes Scherengestänges sind an ihren einen Enden gelenkig mit dem Rahmen 2 bzw. mit dem Hubrahmen 10 verbunden, die anderen Enden sind z. B. mittels nur angedeuteter Bolzen 12 in Schlitzen 13 an den Rahmen 2 und 10 geführt. Wird der Hubrahmen 10 auf- und abbewegt, dann ändert sich infolge dieser Anordnung seine horizontale Stellung gegenüber dem Rahmen 2 nicht, d. h., der Hubrahmen bewegt sich genau lotrecht nach oben oder unten.

Im Hubrahmen sind zwei Umlenkrollen 14, 15 gelagert, über welche ein Laufband 16 gelegt ist. Zumindest eine der Rollen 14, 15 ist in beiden Drehrichtungen antreibbar. Die Bewegungsrichtung des Laufbandes 16 verläuft quer zur Bewegungsrichtung des Wagens, d. h. quer zu den Schienen 4.

Auf das Laufband 16 wird eine Palette P üblicher Abmessungen aufgelegt. Die Länge der Schienen 4 einerseits und der Abstand der Umlenkrollen 14, 15 voneinander sind so bemessen, daß die Palette im wesentlichen um ihre volle Länge bzw. ihre volle Breite verschoben werden kann. Die Größe des Hubes des Hubrahmens hängt ab von der gewünschten Höhe des auf der Palette aufzubauenden Stapels.

Dem Hubwagen 1 ist ein Förderband (Pufferband) 17 zugeordnet, welches die Einzelstücke E von einer nicht dargestellten Produktionsmaschine oder dergleichen zu einer ebenfalls nicht dargestellten Setzvorrichtung heranführt. Diese Setzvorrichtung kann ein Greifer sein, welcher entlang seines horizontalen, gegebenenfalls auch geneigten geraden Weges W, entlang eines Kreisbogens an einem Schwenkarm oder in sonstiger Weise hin- und herbewegbar ist und dessen Bewegung einerseits über dem Förderband 17, andererseits an räumlich immer derselben Stelle St oberhalb der Palette (der "Unterlage"), unabhängig von deren jeweiliger Lage, endigt.

Die Bewegungen des Rahmens 2, des Hubrahmens 10 und des Laufbandes 16 können von Hand aus, über eine elektronische selbsttätige Steuerung oder in beliebiger anderer Weise bewirkt werden.

Anstelle der Scherengestänge kann eine beliebige andere Hubeinrichtung (hydraulischer Motor, Hubketten oder -seile, Spindelantriebe usw.) vorgesehen werden. In gleicher Weise kann das Laufband 16 durch zwei oder mehrere Ketten, aber auch einen quer zum Rahmen 2 verfahrbaren beliebigen Linearförderer, z. B. Schlitten oder Wagen, ersetzt werden.

Die Arbeitsweise der erfindungsgemäßen Vorrichtung ist die folgende:

Die in kontinuierlicher Folge vom Förderband 17 ("Pufferband") herangebrachten Einzelstücke E werden vom (nicht gezeigten) Greifer entlang des Weges W immer bis zur Stelle St verbracht und werden immer an dieser im Raum unveränderlichen Stelle auf die Palette P od. dgl. Unterlage abgesetzt. Der Hubtisch befindet sich dabei in seiner höchsten Stellung. Während jeder Bewegung des Greifers wird z. B. das Laufband jeweils entsprechend der Breite eines Einzelstücks verstellt, sodaß eine Reihe von Einzelstücken auf der Palette gebildet wird. Ist diese Reihe voll, dann wird der Rahmen 2 mittels des Motors 5 um die Länge des Einzelstückes verstellt und in derselben Weise wie soeben beschrieben, wird die nächste Reihe, u.zw. in entgegengesetzter Richtung wie die erste Reihe, gebildet. Auf diese bevorzugte Art wird in Mäanderform die erste Schichte von Einzelstücken auf der Palette gebildet. Der Hubtisch und damit die Palette werden sodann um die Höhe des Einzelstückes abgesenkt und die nächste Lage wird gebildet. Die zweite Lage wird vorzugsweise in entgegengesetzter Mäanderform gebildet. Auf der Palette wird in dieser Weise ein Stapel hergestellt, dessen Höhe von Hub des Hubtisches abhängt.

Durch Vergrößern der schrittweisen Bewegungen von Rahmen 2 und Laufband 16 können zwischen den Einzelstücken auf der Palette beliebig große Abstände freigelassen werden.

Gegebenenfalls können die Einzelstücke auf ihrem Weg vom Pufferband zur Unterlage, wie an sich bekannt, auch gewendet werden.

**Patentansprüche**

Vorrichtung zum Setzen von Einzelstücken (E) auf eine Unterlage (P), z. B. eine Palette, in einer oder mehreren Schichten, wobei die Stücke (E) von immer der gleichen Stelle einer zulaufenden Vorratsreihe auf immer die gleiche räumliche Stelle über der Unterlage (P) verbracht und auf die Unterlage (P) abgesetzt werden und der Unterlage (P) schrittweise, in Richtung der drei räumlichen Koordinatenachsen verlaufende Verstellbewegungen gegeben werden, deren Schrittgröße den entsprechenden Abmessungen der Stücke (E) oder Vielfachen hievon entspricht, bestehend aus einem horizontal um zumindest die Länge der Unterlage (P) hin und her verfahrbaren Hubwagen (1) und einem von dessen Hubeinrichtung getragenen, quer zur Bewegungsrichtung des Hubwagens angeordneten Linearförderer, dadurch gekennzeichnet, daß der Linearförderer ein Laufband (16) ist, dessen Umlenkrollen (14, 15) zumindest den doppelten Abstand der Breite der Unterlage (P) besitzen.

**Claim**

Device for placing single objects (E) on a support (P), for example a palette, in one or more layers, whereby the objects (E) are always moved from the same position of a supply row to the same spatial position above the support (P) and are lowered onto the support (F), the support (F) being positioned in steps along the three spacial coordinate axes, the size of the steps corresponding to the dimensions of the object (E) or plurality thereof, consisting of a lifting truck (1) which can be horizontally moved at least along the length of the support (P) and of a linear conveyor supported by the lifting device and arranged at right angles to the direction of movement of the lifting truck, characterised in that the linear conveyor is a belt (16), the rollers (14, 15) of which are arranged at a distance from each other of at least twice the width of the support (P).

**Revendication**

Dispositif pour disposer des pièces isolées (E) sur un support (P), par exemple une palette, en une ou plusieurs couches, dans lequel les pièces (E) sont toujours amenées du même endroit d'une ligne d'alimentation au même endroit dans l'espace au-dessus du support (P) et déposées sur le support (P), ce support (P) effectuant, dans le sens de trois axes de coordonnées dans l'espace, des déplacements par degrés, ceux-ci ayant une amplitude correspondant aux dimensions des pièces (E) ou à un multiple de ces dimensions, et qui est constitué par un chariot de levage (1) qui peut se déplacer horizontalement d'un mouvement de va-et-vient d'une amplitude au moins égale à la longueur du support (P) et par un transporteur linéaire porté par ce dispositif de levage et orienté transversalement par rapport à la direction du mouvement du chariot de levage, caractérisé en ce que le transporteur linéaire est une bande mobile (16) dont les galets de renvoi (14, 15) sont à une distance l'un de l'autre au moins égale au double de la largeur du support (P).

Fig.1

Fig.3

Fig.2

0 207 931